Europäisches Patentamt

European Patent Office

Office européen des brevets

(11) Publication number: **0 421 571 B1**

(12) EUROPEAN PATENT SPECIFICATION

(45) Date of publication of patent specification: **31.08.94** (51) Int. Cl.⁵: **F16F 1/38**, F16F 3/08

(21) Application number: **90306562.1**

(22) Date of filing: **15.06.90**

(54) **Mounting devices.**

(30) Priority: **02.10.89 US 416183**

(43) Date of publication of application:
**10.04.91 Bulletin 91/15**

(45) Publication of the grant of the patent:
**31.08.94 Bulletin 94/35**

(84) Designated Contracting States:
**DE ES FR GB IT**

(56) References cited:
**EP-A- 262 661          EP-A- 0 020 790**
**DE-A- 2 337 872          DE-B- 1 955 308**
**GB-A- 660 560          US-A- 4 667 943**

**Concise encyclopedia of polymer science
and engineering, J.I. Kroschwitz, pages 821
and 709, John Wiley & Sons**

(73) Proprietor: **GENCORP INC.**
**175 Ghent Road**
**Akron Ohio 44313 (US)**

(72) Inventor: **Hein, Richard D.**
**179 Shady Lane**
**Wabash, Indiana 46992 (US)**

(74) Representative: **Stoner, Gerard Patrick et al**
**MEWBURN ELLIS**
**York House**
**23 Kingsway**
**London WC2B 6HP (GB)**

## Description

This invention relates to mounting devices for the vibration-absorbing mounting of an automotive engine or transmission, which are used to help prevent undesirable vibrations from reaching the passenger compartment of a vehicle.

One known type of mounting device has elastomeric springs in series, separated by closed geometric shapes such as cylinders, squares and rectangles. These devices have been found to lack durability, owing to the residual curing stress arising when moulding elastomer materials between two closed shapes e.g. concentric cylinders.

DE-B-1 955 308 discloses a connection bushing having a torsion spring effect which has a split outer shell sleeve, a rigid inner member extending axially within it, and a coaxial intermediate metal layer member, also in the form of a split sleeve, between the two. Inner and outer elastomeric springs are connected in radial series between the inner member and the intermediate layer member and between the intermediate layer member and the outer shell sleeve respectively. In the installed condition of the device, both of the two split sleeves are swaged to a closed cylindrical form.

EP-A-262661 describes a wheel-chassis suspension apparatus having elements giving a stiffer spring response in one horizontal direction than in another, to improve vehicle handling. The apparatus comprises a rigidly-connected array of four bushings. Each bushing comprises a cylindrical outer metal sleeve, a rigid inner member extending axially in the sleeve, and an intermediate semi-cylindrical metal channel extending axially between the two, with its limbs sometimes shown as overlapping respective opposite sides of the rigid inner member. An elastomeric spring occupies the space between the inner and outer members, with inner and outer elastomeric spring portions thereof on one side of the bushing separated by the metal channel.

In this invention, we provide a mounting device for the vibration-absorbing mounting of an automotive engine or transmission, comprising an axially extending split outer shell sleeve, a rigid inner member extending axially within the outer shell sleeve, an intermediate layer member of non-elastomeric material lying between the outer shell sleeve and the rigid inner member, an inner elastomeric spring fixed between the inner member and the intermediate layer member and an outer elastomeric spring fixed between the intermediate layer member and the outer shell sleeve, whereby said elastomeric springs are connected in series between the rigid inner member and the outer shell sleeve through the intermediate layer member, and in which in the installed condition of the device, the intermediate layer member has the shape of a radially-open channel extending axially relative to the outer shell sleeve, having a base web portion and radially-deflectable spring limbs extending from said base web portion to overlap respective opposite sides of the rigid inner member.

Preferred embodiments of the invention are defined by the claims 2 to 14. In claim 15 the use of the mounting device according to any one claims 1 to 14 to mount an automotive engine or transmission is claimed.

In practice three springs are in series; one is the intermediate layer member, the other two are the elastomeric springs.

That is, a spring coefficient of two elastomeric springs in series is:

$$\text{Old } K_d = \cfrac{1}{\cfrac{1}{Ke_1} + \cfrac{1}{Ke_2}}$$

where $Ke_1$ and $Ke_2$ are the spring rates of the elastomeric springs.
Introducing the intervening layer of spring rate $K_s$:

$$\text{New } K_d = \cfrac{1}{\cfrac{1}{Ke_1} + \cfrac{1}{Ke_2} + \cfrac{1}{K_s}}$$

The non-rigid intermediate layer member also provides a friendly interface between the two elastomeric spring members in that it tends to equalize forces between these members since it is relatively free to move radially to correct this unbalance. Generally it should have a substantially greater tensile than the elastomeric springs, preferably four times greater or more, to bring about the desired properties. Its "limb" portions can deflect radially in a spring-like manner.

The intermediate layer member preferably also has ears or tabs which project from the spring to form a combination which possesses its own tuneable spring rate as well as supplying an additional intermediate mass to the mount. Preferably these project radially outwardly and are embedded in the elastomer. The tabs can also supply increased resistance to axial displacement. The intermediate member may also be provided with slots or voids which provide, along with the physical dimensions, i.e., thickness, width, etc., for tuning of the spring response. Changes made individually or collectively in these elements result in a changed response of the mount. In other words, they may be used to tune the mount response in various directions for a specific environment.

In addition, the closure of the split outer sleeve member during assembly into a mounting bracket produces a swaging effect on the elastomeric elements without performing two swaging operations.

An embodiment of the invention is now described with reference to the accompanying drawings wherein:

Fig 1 is a perspective view of metal components of a mount;

Fig 2 is a side view of the mount; and

Fig 3 is a section of the mount at the line 3-3 of Fig 2.

With general reference to the drawing for like parts, and particular reference to Fig I, there is shown an automatic powertrain mount 5 which comprises a hollow cylindrical inner metal core 6, a parti-cylindrical or channel-form metal intermediate spring 7 which is radially spaced outwardly of the core 6 and, as an outer member an outer particylindrical metal sleeve or shell 8 which is radially spaced outwardly of the spring 7, and at least two resilient elastomeric springs 9 which are positioned between the inner core 7 and outer shell 8 and in which the spring 7 is embedded. The springs 9 are composed of any suitable rubber which has the desired characteristics.

The core 6 is to be fixed to the mounted component e.g. an engine, and has a generally tear-shaped or oval cross-section which includes a pair of converging legs 10,11 connected by a shorter curved web 12 and a longer curved web 13 opposite the shorter web 12. The legs 10,11 converge towards the base web 16 of the metal spring 7. The core 6 is axially longer than any of the aforementioned components of the mount 5 to provide for axial displacement and to equalize the load/bond area of the other support members. The generally tear-shaped design of the core 6 extends the pressure angle surfaces along the outer converging legs 10,11 of the core 6 exposed to the rubber spring 9. This particular design enhances the load-carrying ability of the mount 5.

The intermediate member 7 has a U-shaped cross-section which includes a pair of legs 14,15 connected by a curved web 16 in which a plurality of slots, apertures or voids 17,18 are spaced longitudinally. The spring 7 has a pair of longitudinally-spaced ends 19,20 from each of which a pair of semicircular ears or tabs 21,22 project radially outward towards the outer shell 8 to provide the unique features or characteristics heretofore mentioned. The spring 7 is positioned such that its web 16 confronts the shorter web 12 of the inner core 6, and its opening confronts the longitudinal opening or split of the shell 8.

The outer shell 8, as seen in Figs I and 3, is split longitudinally and, when assembled, has a pair of opposing spaced marginal edges 23,24 which are brought together and maintained in abutting relation. This provides a swaging action when the mount is assembled into a support bracket (not shown) and allows for precompression of the elastomeric springs 9 to reduce residual curing stresses. This radial stress also enhances the stability of the mount 5 relative to the bracket.

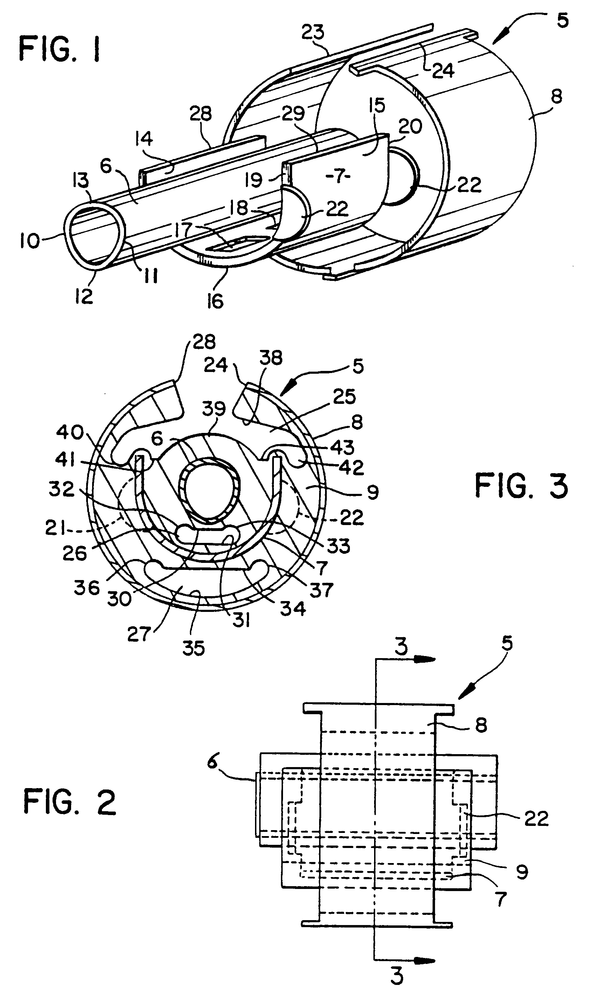

The rubber springs 9, as best seen in Fig 3, are provided with a plurality of voids 25,26,27 which extend longitudinally of the springs 9. The larger void 25 is adjacent the distal marginal edges 28,29 of the spring 7 and spans the distance between the legs 14,15 of the spring 7. The other two voids 26,27 are generally parallel, the shorter void 26 being located between the core 6 and spring 7 and the longer void 27 being located between the spring 7 and outer shell 8. The shorter void 26 is defined by a pair of parallel walls 30,31 connected by bulbous-shaped walls 32,33. The longer void 27 is defined by a flat wall 34, curved wall 35 and similar connecting bulbous-shaped walls 36,37. The largest void 25, spaced on the other side of the core 6, is defined by a flat wall 38, opposing curved wall 39 and similar connecting double bulbous-shaped walls 40,41 and 42,43. The voids 25,26 help eliminate direct compression/tension stresses between the inner core 6 and the spring 7 and are extended longitudinally of the springs 9 to dissipate edge stresses. The remaining void 27 between the spring 7 and outer shell 8 may be similarly viewed in respect to such stresses between the spring 7 and outer shell 8.

The specific location and configuration of the voids affect the reaction of the mount. Generally it may be said that voids in the elastomer lower the spring rate while an increase in the mass of the elastomer increases the spring rate.

By careful control of each element of the mount it is possible to obtain a structure which has the precise attributes needed for a specific application.

In the foregoing description the cylindrical outer shell, inner hollow core and spring have been described as being fabricated from metal. While metal is preferred for many such applications, it is within the compass of the invention that any one of these be of so-called engineering plastics such as polyetheretherketone ("Peek") sold by ICI. The use of these latter materials is often useful when reduced weight is important.

The elastomer used in the practice of this invention is generally rubber, but other elastomers having similar characteristics may also be used.

Thus, there has been described a unique powertrain mount which utilizes an unusual particylindrical spring with ears and voids to accomplish the aforementioned desired characteristics. This, coupled with the novel shaped core, provides a mount structure which is different from any known prior art mounts.

The embodiment shown and described herein is merely exemplary of the invention.

**Claims**

1. A mounting device for the vibration-absorbing mounting of an automotive engine or transmission, comprising an axially extending split outer shell sleeve (8), a rigid inner member (6) extending axially within the outer shell sleeve (8), an intermediate layer member (7) of non-elastomeric material lying between the outer shell sleeve (8) and the rigid inner member (6), an inner elastomeric spring fixed between the inner member (6) and the intermediate layer member (7) and an outer elastomeric spring fixed between the intermediate layer member (7) and the outer shell sleeve (8), whereby said elastomeric springs (9) are connected in series between the rigid inner member (6) and the outer shell sleeve (8) through the intermediate layer member (7), and in which in the installed condition of the device, the intermediate layer member (7) has the shape of a radially open channel extending axially relative to the outer shelf sleeve (8) having an axially extending base web portion (16) and radially-deflectable spring limbs (14,15) extending from said base web portion (16) to overlap respective opposite sides of the rigid inner member (6).

2. A mounting device according to claim 1 in which the intermediate layer member (7) is metal.

3. A mounting device according to claim 1 or claim 2 in which the channel shape of the intermediate layer member (7) has a U-section.

4. A mounting device according to any one of the preceding claims in which the base web portion (16) of the intermediate layer member (7) has one or more slots, apertures or voids (17,19).

5. A mounting device according to any one of the preceding claims in which the intermediate layer member (7) has one or more radially outwardly-projecting axially-Facing tabs (21,22) engaging the outer elastomeric spring.

6. A mounting device according to any one of the preceding claims in which the rigid inner member (6) is a metal tube.

7. A mounting device according to any one of the preceding claims in which the rigid inner member (6) has an oval cross-section.

8. A mounting device according to any one of claims 1 to 6 in which an outer surface of the rigid inner member (6) has surface portions (10,11) which are relatively flat compared with the rest of the outer surface, and converge towards one another.

9. A mounting device according to claim 8 in which the converging surface portions (10,11) converge towards the base web (16) of the intermediate layer member (7).

10. A mounting device according to any one of the preceding claims in which one or both of the inner and outer elastomeric springs (9) has a longitudinal void (25,26,27) aligned with the rigid inner member (6) and the base web (16) of the intermediate layer member (7).

11. A mounting device according to claim 10 in which one said void (26) extends between the rigid inner member (6) and the base web (16) of the intermediate layer member (7), and another said void (27) extends between the base web (16) of the intermediate layer member (7) and the outer shell sleeve (8).

12. A mounting device according to claim 10 or claim 11 in which at least one of said voids (25,26,27) has a generally flattened cross-section with, seen in cross-section, enlarged bulbous end portions (32,33;36,37;40,41,42,43).

13. A mounting device according to any one of the preceding claims in which the axially extending split of the outer shell sleeve (8) communicates with an axially elongate void (25) of the elastomeric springs (9).

14. A mounting device according to any one of the preceding claims in which the outer shell sleeve (8) is parti-cylindrical.

15. Use of a mounting device according to any one claims 1 to 14 to mount an automotive engine or transmission.

**Patentansprüche**

1. Lager zum schwingungsdämpfenden Lagern eines Automobilmotors oder -getriebes, umfassend eine sich axial erstreckende geteilte Außenhüllenbuchse (8), ein sich axial innerhalb der Außenhüllenbuchse (8) erstreckendes starres Innenelement (6), ein zwischen der Außenhüllenbuchse (8) und dem starren Innenelement (6) angeordnetes Zwischenschichtelement (7) aus nichtelastomerem Material, eine zwischen dem Innenelement (6) und dem Zwischenschichtelement (7) befestigte innere elastomere Feder und eine zwischen dem Zwischenschichtelement (7) und der äußeren Hüllenbuchse (8) befestigte äußere elastomere Feder, wobei genannte elastomere Federn (9) zwischen dem starren Innenelement (6) und der äußeren Hüllenbuchse (8) durch das Zwischenschichtelement (7) in Serie verbunden sind, und worin im eingebauten Zustand der Vorrichtung das Zwischenschichtelement (7) die Form eines radial offenen Kanals aufweist, der sich relativ zur äußeren Hüllenbuchse (8) axial erstreckt und einen sich axial erstreckenden Basisstegabschnitt (16) und radial verbiegbare Federnglieder (14, 15) aufweist, die sich von genanntem Basisstegabschnitt (16) erstrecken, um jeweils gegenüberliegende Seiten des starren Innenelements (6) zu überlappen.

2. Lager nach Anspruch 1, worin das Zwischenschichtelement (7) aus Metall besteht.

3. Lager nach Anspruch 1 oder Anspruch 2, worin die Kanalform des Zwischenschichtelements (7) einen U-förmigen Querschnitt aufweist.

4. Lager nach einem der vorhergehenden Ansprüche, worin der Basisstegabschnitt (16) des Zwischenschichtelements (7) eine(n) oder mehrere Schlitze, Öffnungen oder Hohlräume (17, 19) aufweist.

5. Lager nach einem der vorhergehenden Ansprüche, worin das Zwischenschichtelement (7) einen oder mehrere radial herausragende, einander axial zugewandte Fortsätze (21, 22) aufweist, die in die äußere elastomere Feder eingreifen.

6. Lager nach einem der vorhergehenden Ansprüche, worin das starre Innenelement (6) ein Metallrohr ist.

7. Lager nach einem der vorhergehenden Ansprüche, worin das starre Innenelement (6) einen ovalen Querschnitt aufweist.

8. Lager nach einem der Ansprüche 1 bis 6, worin eine Außenfläche des starren Innenelements (6) Oberflächenabschnitte (10, 11) aufweist, die im Vergleich zu den restlichen Außenflächen relativ flach sind und zueinanderlaufen.

9. Lager nach Anspruch 8, worin die einander sich nähernden Oberflächenabschnitte (10, 11) zum Basissteg (16) des Zwischenschichtelements (7) zusammenlaufen.

10. Lager nach einem der vorhergehenden Ansprüche, worin eine oder beide der inneren und äußeren elastomeren Federn (9) einen längsgerichteten Hohlraum (15, 26, 27) aufweist, der mit dem starren Innenelement (6) und dem Basissteg (16) des Zwischenschichtelements (7) ausgerichtet ist.

11. Lager nach Anspruch 10, worin sich einer der genannten Hohlräume (26) zwischen dem starren Innenelement (6) und dem Basissteg (16) des Zwischenschichtelements (7) erstreckt und sich ein weiterer genannter Hohlraum (27) zwischen dem Basissteg (16) des Zwischenschichtelements (7) und der Außenhüllenbuchse (8) erstreckt.

12. Lager nach Anspruch 10 oder Anspruch 11, worin zumindest einer der genannten Hohlräume (25, 26, 27) einen im allgemeinen abgeflachten Querschnitt mit im Querschnitt ersichtlichen wulstartigen Endabschnitten (32, 33; 36, 37; 40, 41, 42, 43) aufweist.

13. Lager nach einem der vorhergehenden Ansprüche, worin die sich axial erstreckende Teilung der äußeren Hüllenbuchse (8) mit einem axial länglichen Hohlraum (25) der elastomeren Federn (9) kommuniziert.

14. Lager nach einem der vorhergehenden Ansprüche, worin die äußere Hüllenbuchse (8) teil-zylindrisch ist.

15. Verwendung eines Lagers nach einem der Ansprüche 1 bis 14 zum Lagern eines Automobilmotors oder -getriebes.

**Revendications**

1. Dispositif de support pour le support amortisseur de vibration d'un moteur ou d'une transmission automobile, comprenant une bague fendue formant enveloppe externe s' étendant axialement (8), un élément interne rigide (6) s'étendant axialement dans la bague formant enveloppe externe (8), un élément formant couche intermédiaire (7) en matériau non élastomère reposant entre la bague formant enveloppe externe (8) et l'élément interne rigide (6), un ressort interne en élastomère fixé entre l'élément interne (6) et l'élément formant couche intermédiaire (7) et un ressort externe en élastomère fixé entre l'élément formant couche intermédiaire (7) et la bague formant enveloppe externe (8), dans lequel lesdits ressorts en élastomère (9) sont reliés en série entre l'élément interne rigide (6) et la bague formant enveloppe externe (8) par l'intermédiaire de l'élément formant couche intermédiaire (7), et dans lequel dans l'état monté du dispositif, l'élément formant couche intermédiaire (7) présente la forme d'un canal radialement ouvert s'étendant axialement par rapport à la bague formant enveloppe externe (8) et ayant une partie inférieure formant âme s'étendant axialement (16) et des branches élastiques radialement déformables (14, 15) s'étendant à partir de ladite partie inférieure formant âme (16) pour recouvrir des côtés opposés respectifs de l'élément interne rigide (6).

2.  Dispositif de support selon la revendication 1 dans lequel l'élément formant couche intermédiaire (7) est métallique.

3.  Dispositif de support selon la revendication 1 ou 2, dans lequel la forme en canal de l'élément formant couche intermédiaire (7) présente une section en U.

4.  Dispositif de support selon l'une quelconque des revendications précédentes, dans lequel la partie inférieure formant âme (16) de l'élément formant couche intermédiaire (7) présente une ou plusieurs fentes, ouvertures ou espaces vides (17, 19).

5.  Dispositif de support selon l'une quelconque des revendications précédentes, dans lequel l'élément formant couche intermédiaire (7) présente une ou plusieurs pattes se faisant face axialement et faisant saillie radialement vers l'extérieur (21, 22) venant en prise avec le ressort en élastomère externe.

6.  Dispositif de support selon l'une quelconque des revendications précédentes, dans lequel l'élément interne rigide (6) est un tube métallique.

7.  Dispositif de support selon l'une quelconque des revendications précédentes, dans lequel l'élément interne rigide (6) présente une section transversale ovale.

8.  Dispositif de support selon l'une quelconque des revendications 1 à 6, dans lequel une surface externe de l'élément interne rigide (6) présente des parties de surface (10, 11) qui sont relativement plates en comparaison avec le reste de la surface externe, et convergent l'une vers l'autre.

9.  Dispositif de support selon la revendication 8, dans lequel les parties de surface convergentes (10, 11) convergent vers l'âme inférieure (16) de l'élément formant couche intermédiaire (7).

10.  Dispositif de support selon l'une quelconque des revendications précédentes, dans lequel l'un ou les deux ressorts en élastomère interne et externe (9) présentent un espace vide longitudinal (25, 26, 27) aligné avec l'élément interne rigide (6) et l'âme inférieure (16) de l'élément formant couche intermédiaire (7).

11.  Dispositif de support selon la revendication 10, dans lequel ledit vide (26) s'étend entre l'élément interne rigide (6) et l'âme inférieure (16) de l'élément formant couche intermédiaire (7), et un autre vide précité (27) s'étend entre l'âme inférieure (16) de l'élément formant couche intermédiaire (7) et la bague formant enveloppe externe (8).

12.  Dispositif de support selon la revendication 10 ou 11, dans lequel au moins l'un desdits espaces vides (25, 26, 27) présente une section transversale généralement aplatie avec, vues en section transversale, des parties d'extrémité élargies en forme de bulbe (32, 33; 36, 37; 40, 41, 42, 43) .

13.  Dispositif de support selon l'une quelconque des revendications précédentes, dans lequel la fente s'étendant axialement de la bague formant enveloppe externe (8) communique avec un espace vide allongé axialement (25) des ressorts en élastomère (9).

14.  Dispositif de support selon l'une quelconque des revendications précédentes, dans lequel la bague formant enveloppe externe (8) est partiellement cylindrique.

15.  Utilisation d'un dispositif de support selon l'une quelconque des revendications 1 à 14 pour supporter un moteur ou une transmission automobile.

FIG. 1

FIG. 3

FIG. 2